# EUROPÄISCHE PATENTSCHRIFT

(11) **EP 0 970 877 B1**
(45) Veröffentlichungstag und Bekanntmachung des Hinweises auf die Patenterteilung: **18.09.2002**
(21) Anmeldenummer: 99111846.4
(22) Anmeldetag: 19.06.1999
(51) Int. Cl.: B62D 21/11, B62D 27/06

(54) **Vorrichtung zur Befestigung eines Funktionsteiles an einem Träger der Karosserie**
Device for mounting a functional part on a vehicle body beam
Dispositif pour fixer un élément fonctionnel sur une poutre de carosserie

(30) Priorität: 09.07.1998 DE 19830762
(43) Veröffentlichungstag der Anmeldung: 12.01.2000
(73) Patentinhaber: DaimlerChrysler AG, 70567 Stuttgart (DE)
(72) Erfinder: Birkwald, Oliver, 71063 Sindelfingen (DE); Boucky, Stephan, 70193 Stuttgart (DE)

(56) Entgegenhaltungen:
- DE-A- 2 442 351
- DE-A- 4 343 642
- DE-A- 19 637 241
- DE-C- 4 314 441
- DE-C- 19 703 520

## Beschreibung

Die Erfindung betrifft einen Träger einer Kraftfahrzeugkarosserie nach dem Oberbegriff des Patentanspruchs 1.

Ein solcher Träger ist in der DE 197 03 520 offenbart.

Der DE 197 03 520 C1 ist eine Befestigungsanordnung als bekannt zu entnehmen, bei der das Funktionsteil - dort eine Hinterachse - über eine in das Innengewinde eines Stutzens hineingedrehte Befestigungsschraube an dem aus mehreren Blechteilen zusammengesetzten Hohlträger befestigt ist. Der Stutzen durchsetzt dabei eine Öffnung im Untergurt des Trägers mit Spiel, wobei ein Flansch des Stutzens an der die Öffnung umgebenden Fläche des Untergurtes anliegt. Als Verliersicherung ist eine Niederhalteeinrichtung aus einem umgeformten Blechteil vorgesehen, durch welches der Flansch mit dem Stutzen in seiner Anlagestellung radial verschieblich am Untergurt gehalten ist. Die Niederhalteeinrichtung in Form des Blechteiles ist über Rastverbindungen am Hohlträger befestigt. Die Einleitung von Kräften von der Hinterachse in den Hohlträger erfolgt über dessen Untergurt.

Aus der DE 196 37 241 A1 ist ein Kraftaufnahmeknoten zum Festlegen eines Funktionsteiles nach oben offenen Hohlträger einer Kraftfahrzeugkarosserie bekannt. Der Kraftaufnahmeknoten umfasst einen stranggepressten Kern mit einer Aufnahmeöffnung zur Befestigung des Funktionsteils. Durch zwei den Hohlträger quer durchsetzende und an diesem befestigte Verbindungsbleche ist ein quaderförmiger Aufnahmeschacht geschaffen, innerhalb dessen der stranggepressten Kern angeordnet ist. Der Kern ist dabei an Begrenzungswänden des Schachtes mittels einer Klebeverbindung festgelegt.

Weiter ist es bekannt, die Fahrschemel für die Anordnung der Lenker für die Räder eines Kraftfahrzeuges und für die Anordnung der Antriebswelle der Räder und des Differentials an jedem Längsträger der Karosserie mit Hilfe eines zum Ausgleich von Toleranzen dienenden "losen" Befestigungspunktes und mit einem starren Befestigungspunkt anzubringen. Zur starren Befestigung hat man bisher Stutzen mit Innengewinde an der Unterseite des Untergurtes des U-förmigen Trägers mit einem Flansch verschweißt. Die für dieses Verschweißen verwendeten MIG- oder MAG-Schweißverfahren sind aufwendig.

Eine Vorrichtung zur Bildung einer "losen" Befestigung ist aus der DE 195 33 138 C1 bekannt. Dort hat man an einem flächigen Blechteil der Karosserie einen haubenförmigen Blechkäfig angeordnet, der wiederum mit einem scheibenförmigen Halter für die Gewindemutter versehen ist, die entweder mit einem mit Innengewinde versehenen Sehraubzapfen versehen ist, der mit radialem Spiel in dem haubenförmigen Blechkäfig geführt ist, oder der eine Ringnut zur Aufnahme eines Ringrandes der Gewindemutter besitzt, die ihrerseits radial verschiebbar in der Halterung angeordnet ist. Durch diese Maßnahme bleibt die Gewindemutter nach allen Seiten radial verschieblich vor der in der Karosserie angeordneten Durchtrittsöffnung angeordnet, durch die dann die Schraube zur Befestigung des Funktionsteiles durchgeschoben wird. Ein Toleranzausgleich ist nach allen Seiten möglich.

Aus der FR 2 694 226 A1 ist es bekannt, Muttern zum Anbringen der zur Befestigung einer Achse dienenden Schrauben in einer bestimmten Lage mit Hilfe einer Schablone zu fixieren und dann festzuschweißen. Solche Befestigungsmuttern müssen, ähnlich wie bei den oben erwähnten Bauarten in aufwendiger Weise verschweißt werden, um die notwendige Stabilität zu erreichen.

Aus der DE 43 14 441 C1 ist es bekannt, Verstärkungsteile mit einer Gewindebohrung zum Befestigen eines Kraftfahrzeugaggregates an einem Hohlträger mit wenigstens zwei Flanschen an zwei Seiten des Hohlträgers anzulegen und eine Punktverschweißung vorzusehen. Die Gewindebohrung selbst wird dort als Materialdurchzug ausgebildet und mit dem freien Ende an einer Bohrung des Hohlträgers positioniert. Durch diese Ausgestaltung sollen die wirksam werdenden Kräfte gleichmäßig und weitflächig verteilt werden. Eine in gewissem Umfang verschiebbare Gewindemutter zum Zweck einer Ausrichtung ist dort jedoch nicht vorgesehen.

Aufgabe der Erfindung ist es, eine Befestigungsanordnung der eingangs genannten Art zu schaffen, die eine verbesserte Einleitung von Kräften in den Hohlträger und eine einfache Montage des Flansches am Träger ermöglicht.

Die Erfindung besteht bei einer Vorrichtung der eingangs genannten Art darin, dass der Flansch mit dem Käfig fest verbunden ist, wobei der Käfig mit Anlageflächen an dem Flansch und am Ober- und Untergurt des Trägers versehen ist. Diese Ausgestaltung, die sich in besonders einfacher Weise an einem im Querschnitt U-förmig ausgebildeten Träger verwirklichen lässt, der in einem seiner Schenkel mit der Durchführöffnung für die Schraube versehen ist, weist den Vorteil auf, daß eine aufwendige Verschweißung des Flansches am Träger überflüssig wird und stattdessen eine einfache Punktverschweißung des Käfigs mit Ober- und Untergurt und ein Punktverschweißen des Flansches mit dem Käfig ausreicht, um eine außerordentlich stabile Anordnung zu erhalten. Der zur Befestigung des Gewindestutzens dienende Käfig wird ausreichend stabil im Träger geführt und gesichert und hält seinerseits den Flansch mit dem Gewindestutzen am Träger. Danach ist vor dem Punktverschweißen eine einfache Einstellungsmöglichkeit gegeben.

In Weiterbildung der Erfindung kann der Flansch seinerseits am Untergurt verpunktet und mit mindestens zwei seitlich hochragenden, parallel zueinander ausgerichteten Führungswänden zur Anlage an Anlageflächen des Käfigs versehen sein, der auf diese Weise leicht montiert und am Träger gehalten wird. Dabei kann in Weiterbildung der Erfindung der Käfig aus zwei mindestens im Bereich der Führungswände des Flansches parallel zueinander verlaufenden Seitenwänden bestehen, die der Höhe des Trägers angepaßt und an ihren Enden mit parallel zu den Trägergurten verlaufenden Flanschen zur Befestigung am Träger versehen sind. Diese Seitenwände können aus Stabilitätsgründen durch mindestens zwei Querwände untereinander verbunden sein, wobei die vordere, zur offenen Seite des Trägers gerichtete Querwand des Käfigs so bemessen ist, daß die Führungswände des Flansches darunter passen, um die Montage zu ermöglichen.

Schließlich kann in Weiterbildung der Erfindung vorgesehen werden, daß die hochragenden Führungswände des Flansches die Verlängerung von gegenüberliegenden Seitenwänden eines den Flansch einfassenden Seitenwandrahmens sind. Durch diese Ausgestaltung kann eine besonders stabile Ausbildung und eine gute Halterung im Käfig erreicht werden.

Die Erfindung ist in der Zeichnung anhand eines Ausführungsbeispieles dargestellt und wird im folgenden.erläutert. Es zeigen:
- Fig. 1: eine schematische Draufsicht auf die Befestigungsanordnung eines Fahrschemels an den Längsträgern eines Kraftfahrzeuges,
- Fig. 2: eine schematische perspektivische Darstellung der Befestigungsanordnung nach der Erfindung für die starre Befestigung des Fahrschemels, und
- Fig. 3: eine Explosionsdarstellung der dem Karosserieträger der Fig. 1 zugeordneten Teile zur starren Befestigung des Fahrschemels.

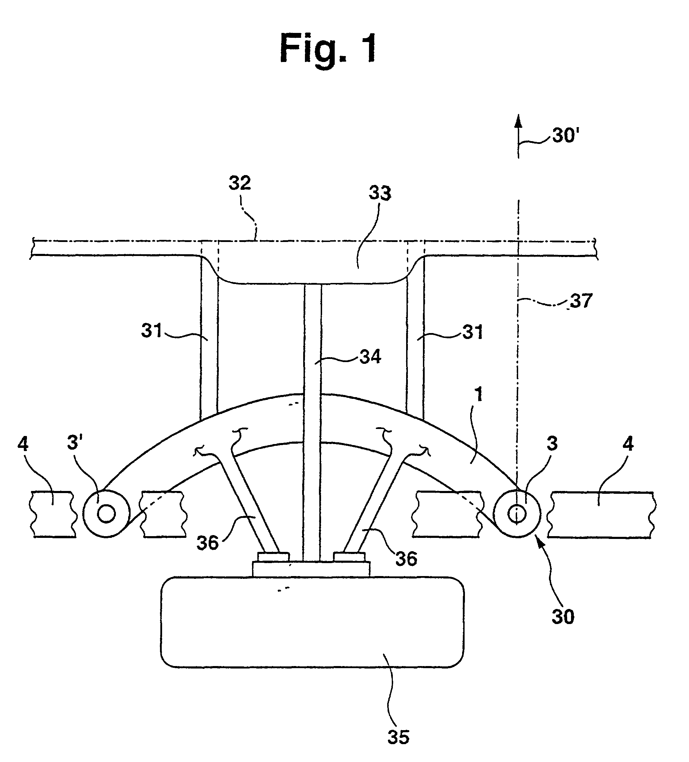

Die Fig. 1 zeigt die Hälfte eines Fahrschemels 1, der im rückwärtigen Bereich einer nicht näher gezeigten Fahrzeugkarosserie und unten an einen Träger 4 der Karosserie mit Hilfe von zwei Augen 3 und 3' befestigt ist, von denen das Auge 3' in nicht näher, weil bekannter Weise, über eine ebenfalls nicht näher gezeigte schwimmende Gewindemutter in der Art eines Loslagers am Träger 4, das Auge 3 dagegen starr am Befestigungspunkt 30 mit dem Längsträger 4 verbunden ist.
Der gezeigte Teil des Fahrschemels 1 ist über Querbrücken 31 mit einem zweiten spiegelbildlich zur Mittellängsebene 32 des Fahrzeuges ausgebildeten Fahrschemelteil verbunden und nimmt das Antriebsdifferential 33 sowie die zum Rad 35 führende Antriebswelle 34 und schwenkbare Lenker 36 zur Führung des Rades 35 auf.
Bei der Befestigung des Fährschemels kommt es bezüglich des starren Befestigungspunktes 30 darauf an, daß der spiegelsymmetrisch zur Ebene 32 gelegene Befestigungspunkt 30' exakt spiegelbildlich angeordnet ist, um einen Versatz der Räder in der Fahrzeuglängsrichtung zu vermeiden. In der Praxis wird daher in der Regel eine Lehre verwendet, um die Ausrichtung der Befestigungspunkte 30 und 30' in der strichpunktiert angedeuteten Ebene 37 zu erreichen.

Die starre Befestigung soll daher zum einen so ausgebildet sein, daß sie eine äußerst stabile und feste Anordnung des Fahrschemels 1 ergibt, zum anderen aber muß vor der Befestigung die Möglichkeit einer gewissen Einstellung bestehen, um die Ausrichtung in der Ebene 37 zu gewährleisten.

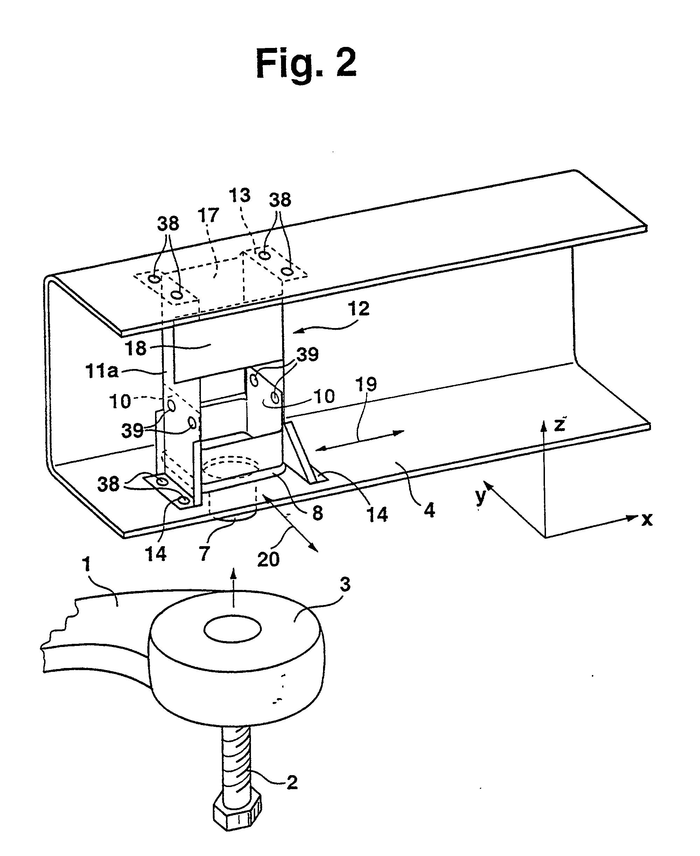

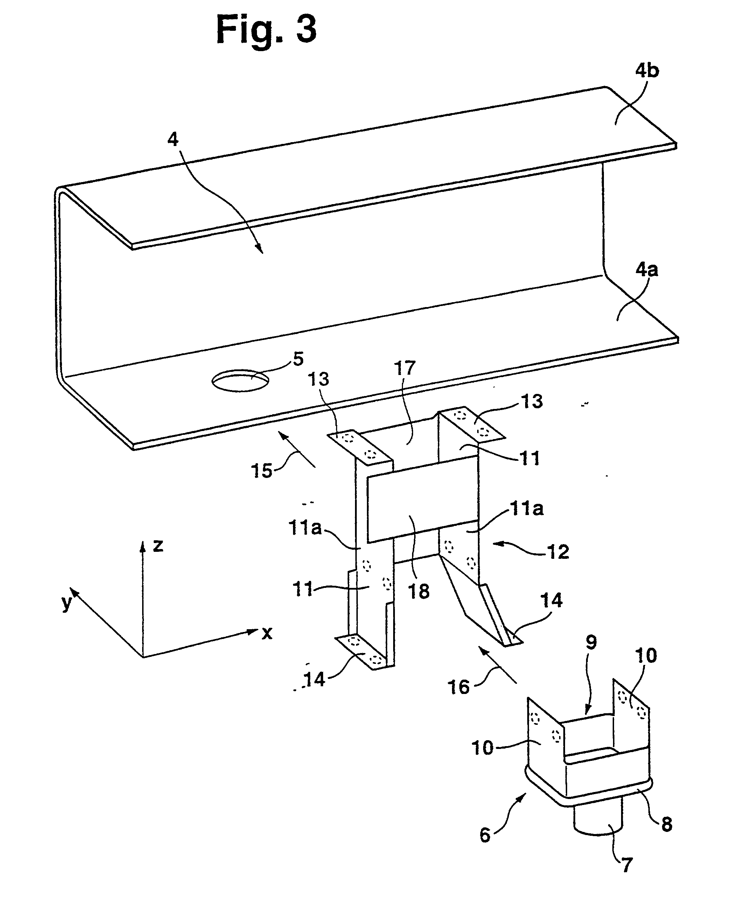

Die Fig. 2 zeigt, daß der Fahrschemel 1, von dem nur ein Teil gezeigt ist, mit Hilfe einer Schraube 2, die ein Befestigungsauge 3 durchdringt, an dem im Querschnitt U-förmig ausgebildeten Träger 4 der im übrigen nicht näher dargestellten Fahrzeugkarosserie befestigt werden soll. Der Träger 4 besitzt an seinem Untergurt - was insbesondere aus Fig. 3 erkennbar ist - eine Öffnung 5, durch die eine Gewindemutter, die als Ganzes mit 6 gekennzeichnet ist, für die Schraube 2 zum Zweck der Befestigung der Achse 1 zugänglich wird. Diese Gewindemutter besteht nun, wie die Fig. 3 deutlich macht, aus einem mit einem Innengewinde versehenen Stutzen 7, der durch die Öffnung 5 hindurchgeschoben werden kann und aus einem mit diesem Stutzen 7 fest verbundenen Flansch 8, der von einem Rahmen 9 eingefaßt ist, von dem zwei parallele gegenüberliegende Seitenwände 10 nach oben verlängert sind. Diese Seitenwände 10 liegen an entsprechenden, ebenfalls parallel zueinander ausgerichteten Wänden 11 eines Käfigs 12 an, dessen Seitenwände 11 an ihren oberen Enden mit abgekanteten Flanschen 13 zur Anlage am Obergurt 4b des U-förmigen Trägers 4 und an ihrem unteren Ende mit abgekanteten Flanschen 14 versehen, die zur Anlage am Untergurt 4a des Trägers 4 dienen. Die Seitenwände 11 sind in ihrem unteren Bereich leicht nach außen ausgestellt, so daß nur der mittlere Bereich 11a der Seitenwände 11 mit den Führungswänden 10 der Gewindemutter 6 in Berührung stehen, wenn die Teile nach Fig. 1 zusammengebaut sind.

Der Zusammenbau erfolgt nun in folgender Weise:

Zunächst wird der Käfig 12 zwischen die Gurte 4a und 4b des Trägers 4 eingeschoben, wobei er mit seinen Flanschen 13 und 14 jeweils an der Innenseite von Ober- und Untergurt geführt ist. Wie die Fig. 3 zeigt, sind die beiden Seitenwände 11 durch zwei Querwände 17 und 18 untereinander zu einer Art Schacht verbunden, wobei die vordere Querwand 18 nicht so weit nach unten reicht, wie die hintere Querwand 17. Die Bemessung ist dabei so vorgenommen, daß bei eingeschobenem Käfig 12, also dann, wenn der Käfig 12 innerhalb der von den Schenkeln des U-Trägers 4 gebildeten Gurte 4a, 4b etwa im Bereich der Öffnung 5 sitzt, nachdem er in Richtung des Pfeiles 15 eingeschoben worden ist, eine Möglichkeit besteht, daß die Führungswände 10 der Gewindemutter 6 unter dieser Querwand 18 in ihre Endposition eingeschoben werden können.

Sitzt nämlich der Käfig 12 innerhalb des Trägers 4, dann wird die Gewindemutter 6 von der freien Seite des Trägers 4 aus im Sinn des Pfeiles 16 in den Käfig 12 eingeschoben, wobei genügend Platz unterhalb der Querwand 18 für diesen Einschiebevorgang vorhanden sein muß. Zu diesem Zeitpunkt wird nämlich der Stutzen 7 auf der Innenfläche des Untergurtes 4a verschoben, bis er die Öffnung 5 erreicht hat. Gegenüber der Endposition ist daher die Gewindemutter 6 sehr viel weiter oben angeordnet als nach dem Einschiebevorgang. Der Stutzen 7 wird dann in die Öffnung 5 geschoben, so daß dadurch die Gewindemutter 6 zunächst noch lose im Träger 4 gehalten ist. Wie Fig. 1 zeigt, ist ein Toleranzausgleich bei der Befestigung der Achse 1 in Richtung der Pfeile 19, also in Längsrichtung des Trägers 4, durch die Verschiebung des Käfigs 12 in dieser Richtung möglich. Ein Toleranzausgleich in Richtung der Pfeile 20, also senkrecht zu der Längsrichtung des Trägers 4, wird durch die Verschiebemöglichkeit der Führungswände 10 der Gewindemutter 6 gegenüber den Wänden 11a des Käfigs 12 möglich. Nach dem Anlegen einer Lehre, mit deren Hilfe die Befestigungspunkte 30 und 30' an beiden Trägern zueinander ausgerichtet werden, werden die Flansche 13 bzw. 14 des Käfigs 12 an den Gurten 4b bzw. 4a an den Stellen 38 und die Führungswände 10 mit den Wänden 11a an den Stellen 39 durch Punktschweißungen angebracht, so daß eine äußerst stabile Befestigung erreicht ist. Auch der Flansch 8 des Stutzens 7 kann, wenn gewünscht, mit dem Untergurt 4a verpunktet werden.

## Patentansprüche

1. Träger (4) einer Kraftfahrzeugkarosserie mit einer Vorrichtung zur Befestigung eines Funktionsteils (1), mit einer Schraubbefestigung des Funktionsteils (1) über eine in das Innengewinde eines Stutzens (7) hineingedrehte Schraube (2), wobei der Stutzen (7) eine Öffnung (5) im Untergurt (4a) des Trägers (4) mit Spiel durchsetzt und ein Flansch (8) des Stutzens (7) an der die Öffnung (5) umgebenden Fläche des Untergurtes (4a) anliegt, und wobei der Flansch (8) von einem Käfig (12) in seiner Anlagestellung am Untergurt (4a) gehalten ist,
**dadurch gekennzeichnet, dass**
der Käfig (12) am Ober- und Untergurt(4a, 4b) des Trägers abgestützt und fest mit dem Flansch (8) des Stutzens (7) verbunden ist.

2. Träger nach Anspruch 1,
**dadurch gekennzeichnet, dass**
der Träger (4) als einteiliges U-Profil mit parallelen Oberund Untergurten(4a, 4b) ausgebildet ist.

3. Träger nach Anspruch 1,
**dadurch gekennzeichnet, dass**
der Flansch (8) mit mindestens zwei seitlich hochragenden, parallel zueinander ausgerichteten Führungswänden (10) zur Punktverschweißung an Anlageflächen (11a) des Käfigs (12) versehen ist.

4. Träger nach Anspruch 3,
**dadurch gekennzeichnet, dass**
der Käfig (12) aus zwei mindestens im Bereich der Führungswände des Flansches (8) parallel zueinander verlaufenden Seitenwänden (11a) besteht, die der Höhe des Trägers (4) angepasst und an ihren Enden mit parallel zu Ober- und Untergurt des Trägers (4a,4b) verlaufenden Flanschen (13, 14) zur Punktverschweißung am Träger (4) versehen sind.

5. Träger nach Anspruch 4,
**dadurch gekennzeichnet, dass**
die Seitenwände (11a, 11) durch mindestens zwei Querwände (17,18) untereinander verbunden sind.

6. Träger nach Anspruch 5,
**dadurch gekennzeichnet, dass**
die zur offenen Seite des Trägers (4) gerichtete Querwand (18) des Käfigs (12) so bemessen ist, dass die Führungswände (10) des Flansches (8) bei der Montage darunter passen.

## Claims

1. A bearer member (4) of a motor vehicle body with a device for attachment of a functioning part (1) via a screw (2) which is screwed into the internal screw thread of a socket (7), the socket (7) passing with clearance through an aperture (5) in the bottom flange (4a) of the bearer member (4) and in that a flange (8) of the socket (7) bears on that surface of the bottom flange (4a) which surrounds the aperture (5), the flange (8) being supported by a cage (12) in its applied position against the bottom flange (4a), **characterised in that** the cage (12) is braced on the upper and lower flanges (4a, 4b) of the bearer member and is rigidly connected to the flange (8) of the socket (7).

2. A bearer member according to claim 1, **characterised in that** the bearer member is constructed as a one-piece channel section with parallel top and bottom flanges (4a, 4b).

3. A bearer member according to claim 1, **characterised in that** the flange (8) is provided with at least two laterally upwardly projecting guide walls (10) orientated parallel with each other for spot welding on bearing surfaces (11a) of the cage (12).

4. A bearer member according to claim 3, **characterised in that** the cage (12) consists of two side walls (11a) extending parallel with each other at least in the area of the guide walls of the flange (8) and which are adapted to the height of the bearer member (4) and which are provided at their ends with flanges (13, 14) extending parallel with the top and bottom flanges of the bearer member (4a, 4b) for spot welding to the bearer member (4).

5. A bearer member according to claim 4, **characterised in that** the side walls (11a, 11) are connected to each other by at least two transverse walls (17, 18).

6. A bearer member according to claim 5, **characterised in that** the transverse wall (18) of the cage (12) which is directed towards the open side of the bearer member (4) is so dimensioned that the guide walls (10) of the flange (8) fit underneath it upon assembly.

## Revendications

1. Poutre (4) d'une carrosserie de véhicule motorisé comportant un dispositif de fixation d'un élément fonctionnel (1), présentant une fixation par vis de l'élément fonctionnel (1) par l'intermédiaire d'une vis (2) vissée dans le filetage intérieur d'un manchon (7), le manchon (7) traversant, avec jeu, une ouverture (5) située dans l'aile inférieure (4a) de la poutre (4) et un rebord (8) du manchon (7) s'appuyant contre la surface de l'aile inférieure (4a) qui entoure l'ouverture (5), et le rebord (8) étant maintenu sur l'aile inférieure (4a), dans sa position d'appui, par une cage (12),
**caractérisée par** le fait
la cage (12) s'appuie sur les ailes supérieures et inférieure (4a, 4b) de la poutre et est solidarisée avec le rebord (8) du manchon (7).

2. Poutre selon la revendication 1,
**caractérisée par le fait**
**que** la poutre (4) a la forme d'un profilé en U d'une pièce à ailes supérieure et inférieure (4a, 4b) parallèles.

3. Poutre selon la revendication 1,
**caractérisée par le fait**
**que** le rebord (8) présente au moins deux parois de guidage (10), orientées latéralement vers le haut et parallèlement l'une à l'autre, pour le soudage par points sur des surfaces d'appui (11) de la cage (12).

4. Poutre selon la revendication 3,
**caractérisée par le fait**
**que** la cage (12) est constituée de deux parois latérales (11a) qui sont orientées parallèlement l'une à l'autre au moins dans la zone des parois de guidage du rebord (8), sont adaptées à la hauteur de la poutre (4) et, à leurs extrémités, présentent, pour le soudage par points sur la poutre (4), des rebords (13, 14) orientés parallèlement aux ailes supérieure et inférieure de la poutre (4a, 4b).

5. Poutre selon la revendication 4,
**caractérisée par le fait**
**que** les parois latérales (11a, 11), sont reliées l'une à l'autre par au moins deux parois transversales (17, 18).

6. Poutre selon la revendication 5
**caractérisée par le fait**
**que** la paroi transversale (18) de la cage (12) orientée vers le côté ouvert de la poutre (4) est dimensionnée de façon que les parois de guidage (10) du rebord (8) passent par dessous lors du montage.
